## Europäisches Patentamt
## European Patent Office
## Office européen des brevets

(11) Veröffentlichungsnummer: **0 001 047**
**B1**

(12) **EUROPÄISCHE PATENTSCHRIFT**

(45) Veröffentlichungstag der Patentschrift:
14.01.81

(51) Int. Cl.³: **B 01 D 13/04**, A 61 M 1/03 //
**B29D7/24**

(21) Anmeldenummer: 78100589.7

(22) Anmeldetag: 03.08.78

(54) Viscose-Membran für die Dialyse, insbesondere Hämodialyse, und Verfahren zu ihrer Herstellung.

(30) Priorität: 13.08.77 DE 2736569

(43) Veröffentlichungstag der Anmeldung:
21.03.79 Patentblatt 79/6

(45) Bekanntmachung des Hinweises auf die Patenterteilung:
14.01.81 Patentblatt 81/2

(84) Benannte Vertragsstaaten:
BE DE FR GB NL SE

(56) Entgegenhaltungen:
— DD-A-94 162
— DE-C-323 185
— GB-A-1 276 152
— US-A-3 121 761
— US-A-3 280 234
— US-A-3 546 209
— CHEMIE-ING.-TECHNIK, Band 44, 1972 Weinheim
E. HOCHSCHERF u. G. MANDRE: »Herstellung von semipermeablen Membranen«, Seiten 1152—1160.

(73) Patentinhaber: HOECHST AKTIENGESELLSCHAFT,
KALLE, Patentabteilung Postfach 3540,
D-6200 Wiesbaden 1 (DE)

(72) Erfinder: Walch, Axel, Dr,, Gräfstrasse 71,
D-6000 Frankfurt/M (DE)
Erfinder: Bytzek, Max, Pappelweg 13, D-6200 Wiesbaden (DE)
Erfinder: Wildhardt, Jürgen, Bergstrasse 16,
D-6271 Wallrabenstein (DE)
Erfinder: Hammer, Klaus-Dieter, Dr., Kettelerstrasse 20,
D-6500 Mainz (DE)

— Industrial and Engineering Chemistry,
Process Design and Development,
vol. 14, 1975, Washington
J. D. ROUSE u. J. ULTMANN:
»The Effects of a Uniaxial Elastic Elongation on the Permeability of Cellophane Membrane to Electrolytes«, Seiten 122—127.
— J. PHYS. CHEM., Vol. 65, 1961, Seiten 166—172.
— METHODS OF BIOCHEMICAL ANALYSIS,
vol. 10, 1962, Interscience Publ.,
New York—London, L. C. CRAIG, T. P.
KING: »Dialysis«, Seiten 183—185.

### Viskose-Membran für die Dialyse,
### insbesondere Hämodialyse, und Verfahren zu ihrer Herstellung

Die Erfindung betrifft eine Viskosemembran für die Dialyse, insbesondere Hämodialyse, und ein Verfahren zu ihrer Herstellung. Unter Viskosemembran ist eine Membran zu verstehen, die aus regenerierter Cellulose besteht und aus Viskose hergestellt ist.

Das Verfahren der Dialyse und die als »künstliche Niere« bekannten Vorrichtungen dienen insbesondere der Behandlung von chronischen Nierenleiden, wobei aus dem Blut der Patienten toxische und harnpflichtige Metabolite mit möglichst permselektiven, d. h. selektiv durchlässigen, Membranen abgetrennt werden sollen. Metabolite sind Bestandteile der lebenden Zellen, die den normalen Ablauf der Stoffwechselreaktionen steuern sowie Stoffwechselprodukte, die im menschlichen oder tierischen Organismus gebildet oder abgebaut werden. Harnpflichtige Metabolite sind niedermolekulare Verbindungen wie Harnstoff, Kreatinin oder Wasser und höhermolekulare Verbindungen wie Kohlenhydrate und Peptide, die bei gesunden Nieren aus dem Blut entfernt und über den Harn ausgeschieden werden.

Bei der Hämodialyse sollen die toxischen und harnpflichtigen Metabolite möglichst quantitativ, insbesondere durch Lösungs-/Diffusionsvorgänge über gelartige Poren einer permselektiven Membran aus dem Blut in eine Spülflüssigkeit übergeführt werden. Treibende Kraft für den Durchtritt jeder diffusiblen Substanz durch die Membran ist ihre unterschiedliche Konzentration zu beiden Seiten der Membran (diffusive Permeabilität). Zur Permeation von Wasser (Ultrafiltration) ist eine geringe Druckdifferenz erforderlich, wobei auf der Blutseite des Dialysators ein höherer hydrostatischer Druck herrscht oder aber ein Unterdruck auf der Dialyseseite angelegt wird.

Von einer geeigneten Dialysemembran wird neben guter Blutverträglichkeit und Naßfestigkeit, große Dialysierleistung, d. h. gute Permeabilität, verlangt. In der Praxis wird hauptsächlich als Membranmaterial regenerierte Cellulose benutzt, während Membranen aus vollsynthetischen Polymeren, beispielsweise auf Basis von Polyacrylnitril, Celluloseacetat oder Polycarbonat, sich in technischem Maßstab weniger wirtschaftlich fertigen lassen und insbesondere ihre Handhabung beim Bau der Dialysatoren bzw. ihre Dialysierleistung oder Naßfestigkeit in Dialysatoren nach dem Stande der Technik unbefriedigend ist.

Die im Handel befindliche Dialysemembranen aus regenerierter Cellulose werden bevorzugt nach zwei grundsätzlich verschiedenen Verfahren hergestellt, nämlich nach dem Viskose-Verfahren und dem Kupferammoniak-Verfahren. Bei dem ersten Verfahren wird eine durch Xanthogenierung hergestellte Viskoselösung zu flächenhaften Gebilden aus Viskose-Gel versponnen, d. h. koaguliert, und in saurem Medium zu Cellulosehydrat-Gel regeneriert, gewaschen, entschwefelt, mit Weichmacher behandelt und getrocknet. Bei dem zweiten Verfahren wird Cellulose mit einer wäßrigen ammoniakalischen Lösung (»Schweizers Reagens«) in eine klare Lösung einer Komplexverbindung übergeführt, die anschließend zu flächenhaften Körpern versponnen wird. In geeignetem Medium wird danach die Cellulose regeneriert. Aufgrund der beiden völlig verschiedenen Verfahrensweisen zeigen die danach hergestellten Membranen große Unterschiede in ihrem strukturellen Aufbau und folglich auch Unterschiede in ihren dialytischen Eigenschaften.

So zeigen die nach dem Kupferammoniak-Verfahren hergestellten Membranen den Nachteil, daß ihre Molekulargewichtsausschlußgrenze auf etwa 5000 bis 10 000 Dalton begrenzt ist, so daß während der Dialyse mittel- und hochmolekulare Metabolite im Blut des Patienten angereichert werden. Auch verlangt dieses Verfahren relativ aufwendige Maßnahmen zur Rückgewinnung der eingesetzten Kupfersalze und zur Reinigung der Membran von Kupferspuren. Obwohl demgegenüber die bekannten Viskosemembranen all diese Nachteile nicht aufweisen, sind sie bezüglich ihrer Dialysierleistung bisher nicht zufriedenstellend oder weisen ebenfalls nur geringe Naßfestigkeit auf. Sie können daher kaum für Zwecke der Hämodialyse eingesetzt werden. Dies gilt insbesondere, da die Ultrafiltration und diffusive Permeabilität bei den bekannten Dialysierschläuchen aus Cellulosehydrat nach dem Viskoseverfahren meist zu gering sind. Durch Spinnen sehr dünner Membranen können zwar höhere Werte der diffusiven Permeabilität erzielt werden, jedoch nur auf Kosten der Naßfestigkeit, häufig ausgedrückt als Berstdruck, und in Verbindung mit einer überproportional gestiegenen Ultrafiltration — was nicht in allen Fällen wünschenswert ist — und vor allem in Verbindung mit großen Problemen der Spinntechnologie.

Es war somit bisher nicht möglich, ein geeignetes Verhältnis zwischen Ultrafiltration und diffuser Permeabilität zu erzielen. Insbesondere aber weisen bekannte Dialysemembranen aus regenerierter Cellulose sowohl die nach dem Viskose- als auch nach dem Cuoxamverfahren hergestellt werden quer oder längs ihrer Spinnrichtung mitunter eine Quellung und Flächenzunahme auf. Sie bedingt u. a., daß herkömmliche Dialysatorkonstruktionen eine äußerst aufwendige Profilierung zur Stützung der Membranen aufweisen müssen, um das Blutfüllvolumen der Geräte bei Anlegen eines transmembranen Druckes möglichst klein bzw. konstant zu halten.

Der Erfindung liegt somit die Aufgabe zugrunde, die diffuse Permeabilität, die Ultrafiltration und zugleich die Naßfestigkeit der bekannten Membranen zu verbessern und ihre Flächenquellung zu verringern.

Nach der Literaturstelle J. Phys. Chem., 1961, 65, Seiten 166 bis 172, sollen im Handel befindliche Dialysemembranen aus regenerierter Cellulose zur Verbesserung ihrer dialytischen Eigenschaften durch hydraulischen Druck möglichst gleichmäßig in Längs- und Querrichtung gestreckt werden. Die Streckung erfolgt somit nicht an einem Körper aus Cellulosehydrat-Gel, sondern an vollständig fertiggestellten Membranen, d. h. nach dem Trocknen und Anfeuchten der Membran. Beim Trocknen wird jedoch der offenporige Gelzustand in eine dehydratisierte und damit dichtere Membranstruktur übergeführt, welche nur noch in engen Grenzen verstreckt werden kann. Bei einer Verdehnung von maximal 30 bis 40% zerreißt bereits die Membran (vgl. Methods of Biochemical Analysis, Vol. 10, 1962, Interscience Publ., New York—London, Seite 185, 3. Zeile). Da ferner die im Handel befindlichen Viskosemembranen verschiedene Festigkeitswerte in Längs- und Querrichtung zeigen, müssen auch nach einer Verstreckung dieser Membranen gemäß der Literaturstelle J. Phys. Chem. unterschiedliche Festigkeitswerte vorhanden sein. Somit kann dieser Literaturstelle nur entnommen werden, daß eine nachträgliche Verdehnung der Membran zu einer Änderung einiger dialytischer Eigenschaften führen kann.

Eine Anregung, eine Membran mit den im vorliegenden Anspruch 1 genannten Merkmalen zu schaffen, kann der Durchschnittsfachmann dieser Literaturstelle nicht entnehmen.

Aus den US-PS 31 21 761 und 32 80 234 sind für Verpackungszwecke geeignete Flachfolien aus regenerierter Cellulose bekannt, die durch biaxiales Verstrecken eines schlauchförmigen, nur koagulierten, aber noch nicht regenerierten, Viskosefilms hohe Festigkeit in Längs- und Querrichtung und gute Dimensionsstabilität erhalten. Hierbei wird ein extrudierter Schlauch aus Viskose-Gel bereits vor dem Regenerieren um das eineinhalb- bis viereinhalbfache seiner Länge und seines Umfanges gestreckt, wobei die für eine Verpackungsfolie wichtige Festigkeit in Verbindung mit einer möglichst niedrigen Durchlässigkeit durch das gleichmäßige Strecken in Längs- und Querrichtung des Schlauches vor dem Regenerieren der Cellulose erzielt werden. Diese bekannten Folien sollen zwar auch als »pellicles« eingesetzt werden, worunter man unter anderem auch semipermeablen Membranen verstehen kann. Die angegebenen Streckwerte liegen jedoch über 150%, um der Folie eine möglichst hohe Festigkeit zu verleihen, und damit wesentlich höher als der beanspruchte Bereich der vorliegenden Erfindung.

Diese Patentschriften geben auch keine Anregung, diese Verpackungsfolien nach Änderung der dort genannten Streckbedingungen als Membranen zur Dialyse zu verwenden. Außerdem bestehen große verfahrenstechnische Schwierigkeiten, großkalibrige Schläuche, d. h. mit einem Durchmesser von größer als etwa 30 bis 40 mm, aus Viskose-Gel durch Regenerier- und Waschbäder zu führen, wenn ihre Naßdicke kleiner als 50 Mikron ist.

Überraschenderweise wurde nun gefunden, daß die obengenannte Aufgabe dann gelöst wird, wenn man das im Verlaufe der Herstellung der Viskosemembran gebildete Cellulosehydrat-Gel nach Regenerieren von Viskose-Gel, aber noch vor dem Trocknen, in Querrichtung um 40 bis 120% verdehnt, so daß die erhaltene Membran in Längs- und in Querrichtung etwa im gleichen Maße orientiert ist.

Gegenstand der Erfindung ist somit eine Viskosemembran für die Dialyse, insbesondere Hämodialyse, die dadurch gekennzeichnet ist, daß sie im trockenen spannungsfreien Zustand in Längs- und Querrichtung im wesentlichen gleich stark orientiert ist und eine Doppelbrechung in jeder Richtung von kleiner/gleich $6 \times 10^{-3}$ und einen Gangunterschied von kleiner/gleich 150 nm aufweist und die im noch nassen Zustand vorgenommene Querverdehnung 40 bis 120% gegenüber der nassen Membran vor der Querverdehnung beträgt.

Die Doppelbrechung ist bekanntlich die Differenz der Brechungsindizes in Längs- und Querrichtung $(n_2 - n_1)$, der Gangunterschied ist definiert als

$$(n_2 - n_1)d \qquad d = \text{Membrandicke}$$

Im kleinsten Fall gehen die Werte für die Doppelbrechung gegen Null.

Die Brechungsindizes der trockenen Membran werden z. B. ermittelt mit einem »Leitz«-Polarisationsmikroskop mit »Berek«-Kompensator, wobei jeweils in Spinnrichtung und in Querrichtung gemessen wird.

Vorzugsweise zeigt die Membran beim Übergang vom Trocken- in den Naßzustand, d. h. z. B. bei Inbetriebnahme, einen Schrumpf von jeweils 0,5 bis 10% in Längs- und Querrichtung.

Gegenstand der Erfindung ist ferner ein Verfahren zur Herstellung einer Viskosemembran für die Dialyse, insbesondere Hämodialyse, wobei man einen flächenhaften oder schlauchförmigen Körper aus Cellulosehydrat-Gel aus Viskose herstellt, ihn von Säuren, Salzen und schwefelhaltigen Produkten befreit, mit einer Weichmacherlösung in Kontakt bringt und trocknet. Es ist dadurch gekennzeichnet, daß man den Körper aus Cellulosehydrat-Gel vor dem Trocknen in Querrichtung in einem Verhältnis verdehnt, das dem der Längsstreckung entspricht, die sich durch den Herstellungsprozeß ergibt.

Die Herstellung von Cellulosehydrat-Gel aus Viskose ist bekannt und erfolgt beispielsweise nach folgendem Verfahren:

Zunächst wird durch Xanthogenierung eine Viskoselösung hergestellt. Aus Cellulose wird mit Natriumhydroxidlösung Alkalicellulose gebildet, die in einer zweiten Stufe mit Schwefelkohlenstoff im alkalischen Medium Cellulosexanthogenat bildet, welches in einer wäßrigen Natriumhydroxidlösung in Viskose übergeführt wird. Die Viskoselösung enthält meist noch 4 bis 15 Gewichtsprozent Cellulose. Nach der Reifung wird die Viskose versponnen, d. h. koaguliert, z. B. aus einer Ringdüse mit einer Spaltweite von 200 bis 700 Mikron zu einem Folienschlauch. Das Spinnbad enthält beispielsweise insgesamt 20 bis 50 Gewichtsprozent Schwefelsäure, Natriumsulfat und/oder Ammoniumsulfat (GB-PS 12 40 560).

In weiteren Stufen wird das aus Viskose-Gel bestehende flächenhafte oder schlauchförmige Produkt in saurem Medium, z. B. in verdünnter (<5 Gewichtsprozent) Schwefelsäure, zu Cellulosehydrat-Gel regeneriert, zur Entfernung von Säure und Salzen mit Wasser gewaschen, mit z. B. Natriumsulfitlösung entschwefelt, gegebenenfalls durch ein Bleichbad und schließlich durch ein verdünntes Weichmacherbad mit z. B. wäßriger 10- bis 15prozentiger Glycerin-, Sorbit- oder Glucoselösung (FR-PS 13 85 394) geführt.

Das Cellulosehydrat-Gel wird nach dem Stande der Technik durch intensive Trocknung bei 100 bis 140°C von einem offenporigen Gelzustand in eine dehydratisierte und damit dichtere Membran aus regenerierter Cellulose übergeführt. Zur Herstellung flacher Membranen wird der Schlauch gegebenenfalls aufgeschnitten.

Die erfindungsgemäßen Eigenschaften erhält die Membran durch Verdehnen des regenerierten Schlauches aus Cellulosehydrat-Gel vor dem Trocknen, wobei der Schlauch durch Aufblasen um 40 bis 120%, vorzugsweise bei den üblichen Schlauchkalibern um 60 bis 100%, in Querrichtung gedehnt wird. Die Längsstreckung erfolgt nach dem Stand der Technik bereits im Spinnprozeß und hängt bekanntlich insbesondere ab von der Viskose, von der Menge an Viskose, welche dem Ringspalt pro Zeiteinheit zugeführt wird, von der Spaltweite der Ringdüse und von der Abzugsgeschwindigkeit der koagulierenden Viskose. Eine weitergehende Längsstreckung bei den anderen Verfahrensstufen ist möglichst gering zu halten. Bei vorgegebener Längsstreckung wird somit das Ausmaß der Querverdehnung dementsprechend angepaßt, so daß die erfindungsgemäße Membran in Längs- und Querrichtung im wesentlichen gleich stark orientiert ist. Für ein bestimmtes Schlauchkaliber gibt es somit jeweils eine optimale Querverdehnung, mit der ein definiertes Verhältnis der Ultrafiltration zur diffusiven Permeabilität eingestellt wird. Auf diese Weise wird außerdem im Gegensatz zum Stande der Technik beim Übergang der Membran vom Trocken- in den Naßzustand ein Schrumpf sowohl in Längs- als auch in Querrichtung von 0,5 bis 10% erzielt. Der auftretende Flächenschrumpf ermöglicht in Dialysatorkonstruktionen mit fixierter Membran ein sehr geringes Blutfüllvolumen.

Membranen mit überraschend hoher diffusiver Permeabilität und Ultrafiltration bei der Hämodialyse werden erhalten, wenn der Schlauch vor, insbesondere aber nach dem Querverdehnen mit einer zusätzlichen Weichmacherlösung mit erhöhter Weichmacherkonzentration behandelt wird, wobei gegebenenfalls die erste, verdünnte Weichmacherlösung entfällt. Diese Membranen sind insbesondere für die sogenannte »Ultradiffusion«, einer speziellen Form der Hämodialyse geeignet. Hierbei können die toxischen Metabolite und Wasser besonders rasch aus dem Blut entfernt werden. Wird jedoch nur eine verdünnte Weichmacherlösung vor oder nach dem Querverdehnen eingesetzt, können diffusive Permeabilität und Ultrafiltration allein durch Querverdehnen in einer für die Hämodialyse geeigneten Weise eingestellt werden. Die Weichmacherlösung mit erhöhter Konzentration ist vorzugsweise eine wäßrige Glycerinlösung, insbesondere mit einer Glycerinkonzentration zwischen 20 bis 70 Gewichtsprozent. Diese hohe Konzentration an Weichmacher liegt deutlich über den in Weichmacherbädern vorhandenen Konzentrationen, welche üblicherweise bei der Herstellung von Viskosemembranen eingesetzt werden. Hohe Konzentrationen in Weichmacherbädern wurden bisher nur bei der Herstellung von Membranen aus Celluloseestern, wie Celluloseacetat, oder Celluloseäther beschrieben (GB-PS 12 76 152).

Die gemäß der Erfindung vor oder nach dem Querverdehnen des Cellulosehydrat-Gels erfolgende Weichmacherbehandlung mit einer hoch konzentrierten Lösung verhindert ein Absinken der Durchlässigkeit im Verlaufe des anschließenden Trocknens des Cellulosehydrat-Gels und bewirkt überraschenderweise eine Erhöhung der Molekulargewichtsausschlußgrenze, die als Rückhaltevermögen beispielsweise gegenüber Dextran 10 000 ausgedrückt werden kann. Die Membran enthält nach dem Trocknen nunmehr 30 bis 60 Gewichtsprozent Weichmacher.

Die nach dem erfindungsgemäßen Verfahren erhaltene Viskosemembran zeigt eine Dicke von 20 bis 60 Mikron im Naßzustand. Ihre Permeabilität gegenüber Harnstoff liegt bei $5,5 \times 10^{-4}$ bis $15 \times 10^{-4}$ (cm/s), gegenüber Vitamin $B_{12}$ bei $0,5 \times 10^{-4}$ bis $2 \times 10^{-4}$ (cm/s), ihr Rückhalt gegenüber Dextran 10 000 beträgt zwischen 40 und 60%; sie zeigt eine Ultrafiltrationsleistung von $3 \times 10^{-5}$ bis $15 \times 10^{-5}$ (cm/s × bar); der Berstdruck (naß) liegt bei 0,3 bis 0,7 bar.

Diese Summe guter Eigenschaften, insbesondere aber die Möglichkeit zur Einstellung des geeigneten Verhältnisses der Ultrafiltration zur diffusen Permeabilität bei dennoch hoher Naßfestigkeit und die Möglichkeit zur Erzielung eines sehr geringen Blutfüllvolumens, macht die Membran gemäß der Erfindung in hervorragendem Maße geeignet für die Hämodialyse. Diese Eigenschaften der Membran ermöglichen den besonders vorteilhaften Einsatz der Membran ferner für alle technischen Dialysezwecke, z. B. zur Reinigung von Lösungen mit hochmolekularen Bestandteilen.

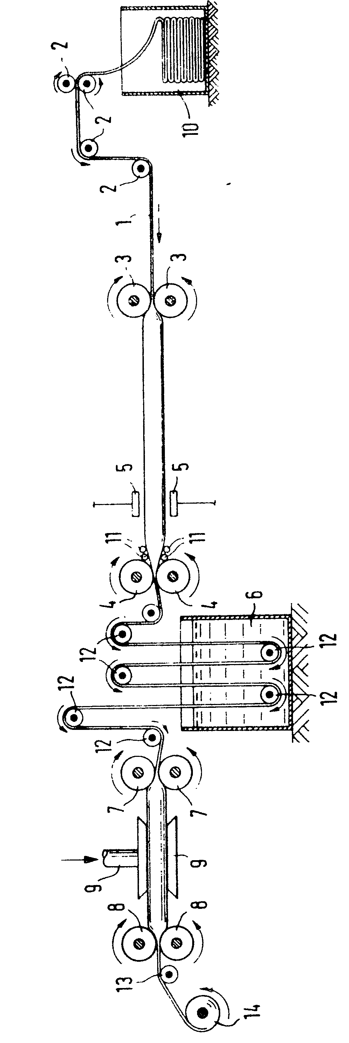

Die Erfindung wird anhand der folgenden Beispiele und der Figur näher erläutert. Die

Herstellung des Schlauches aus Cellulosehydrat-Gel erfolgt jeweils nach dem Stand der Technik.

### Beispiel 1

Nach dem Viskoseverfahren wird ein unverstärkter Schlauch (Flachbreite 109 mm) aus Cellulosehydrat-Gel auf bekannte Weise hergestellt. Der mit einer wäßrigen Glycerinlösung (11 Gewichtsprozent) behandelte Schlauch wird der in der Figur dargestellten Nachbehandlung unterzogen. Der Schlauch 1 wird aus einem Behälter 10 über Rollen 2 mit 4 m/min zwischen zwei steuerbaren Quetschwalzenpaaren 3, 4 (Abstand ca. 4 m) geführt und mit Hilfe von Druckluft (0,08 bar) aufgeblasen. Hierdurch wird eine Querverdehnung von 80% eingestellt bei einem Durchmesser von 125 mm. Zur Kaliberkonstanthaltung dient eine bekannte Vorrichtung 5. Vor dem Quetschwalzenpaar 4 befinden sich Einlaufwalzen 11. Der nun radial verdehnte Gelschlauch 1 wird flachgelegt und kontinuierlich über eine Länge von 35 m über Rollen 12 durch eine auf 50°C beheizte Weichmacherkufe 6 (Glyceringehalt 64 Gewichtsprozent) geführt. Nach Quetschwalzen 7 durchläuft der Schlauch 1 im aufgeblasenen Zustand ein 4 m langes Heißluft-Trocknerrohr 9 bei 95°C und wird nach Durchlaufen von Quetschwalzen 8 und der Walze 13 mit der Walze 14 aufgerollt. Der erfindungsgemäße Schlauch aus Celluloseregenerat, hergestellt aus Viskose, wird mit Schläuchen aus Celluloseregenerat, hergestellt aus Viskose bzw. nach dem Kupferammoniakverfahren-Verfahren, verglichen, die bereits für die Dialyse eingesetzt werden; nämlich VISKING (Warenzeichen der UCC) und CUPROPHAN (Warenzeichen der ENKA GLANZSTOFF AG). Außerdem wird ein Dialysierschlauch Typ NALO (Warenzeichen der HOECHST AG) zum Vergleich herangezogen, der analog dem Beispiel 1 hergestellt wurde, jedoch ohne Querverdehnung und ohne zusätzliche Weichmacherbehandlung.

Tabelle 1

| Kenngröße | Celluloseregenerat nach dem Stand der Technik | | | Celluloseregenerat nach Beispiel 1 |
|---|---|---|---|---|
| | Typ NALO® | Typ VISKING | Typ CUPROPHAN® | |
| Durchmesser (mm) | 70 | 100 | 100 | 100 |
| Flachbreite (mm) | 109 | 150 | 150 | 150 |
| Flächengewicht (g/m²) | 52 | 155 | 32 | 61 |
| Trockendicke (Mikron) | 38 | 100 | 22 | 43 |
| Naßdicke (Mikron) | 79 | 188 | 44 | 55 |
| Glyceringehalt (Gewichtsprozent) | 19 | 18 | 26 | 56 |
| Berstdruck (bar) | 0,61 | 1,91 | 0,38 | 0,52 |
| Ultrafiltration (cm/s × bar) | $4,8 \times 10^{-5}$ | $0,8 \times 10^{-5}$ | $4,4 \times 10^{-5}$ | $8,3 \times 10^{-5}$ |
| Permeabilität (cm/s) Harnstoff Vitamin B$_{12}$ | $3,9 \times 10^{-4}$ $3,0 \times 10^{-5}$ | $1,4 \times 10^{-4}$ $0,7 \times 10^{-5}$ | $7,1 \times 10^{-4}$ $6,0 \times 10^{-5}$ | $7,2 \times 10^{-4}$ $9,0 \times 10^{-5}$ |
| Rückhalt (%) (Dextran 10 000) | 62 | 65 | 71 | 52 |
| Doppelbrechung | $6,8 \times 10^{-3}$ | $2,0 \times 10^{-3}$ | $13,0 \times 10^{-3}$ | $2,6 \times 10^{-3}$ |
| Gangunterschied (nm) | 258 | 200 | 286 | 112 |
| Schrumpf trocken/naß (%) quer längs | +1,3 +1,9 | +1,6 −0,5 | ~0 +3,3 | +8,0 +3,0 |

### Beispiel 2

Nach dem Viskoseverfahren wird wie üblich ein unverstärkter Schlauch (Flachbreite 109 mm) aus Cellulosehydrat-Gel hergestellt. Nach der Behandlung mit einer 11 Gewichtsprozent Glycerin enthaltenden wäßrigen Lösung wird der Schlauch der in der Figur dargestellten Nachbehandlung, jedoch ohne der in Beispiel 1 beschriebenen zusätzlichen Weichmachung, unterzogen. Der Schlauch aus Cellulosehydrat-Gel 1 wird von einer Rolle mit 4 m/min abgerollt und zwischen zwei steuerbaren Quetschwalzenpaaren 3, 4 (0,08 bar) aufgeblasen. Hierdurch wird eine Querverdehnung von 80% eingestellt bei einem Durchmesser von 125 mm. Der nun radial verdehnte Gelschlauch wird zunächst flachgelegt und durchläuft dann in mit Stützluft aufgeblasenem Zustand kontinuierlich ein 4 m langes Heißluft-Trocknerrohr 9 bei 95°C. Abschließend wird der trockene Schlauch zur Konfektionierung aufgerollt. Der erfindungsgemäße Schlauch aus Celluloseregenerat wird mit einem Schlauch aus Celluloseregenerat Typ VISKING (Warenzeichen der UCC) verglichen, an dem eine nachträgliche Querverdehnung versucht wurde.

Tabelle 2

| Kenngröße | Celluloseregenerat nach dem Stand der Technik nachträglich querverstreckt<br><br>Typ VISKING® | Celluloseregenerat nach Beispiel 2 |
|---|---|---|
| Durchmesser (mm) | 101 | 100 |
| Flachbreite (mm) | 152 | 150 |
| Flächengewicht (g/m²) | 154 | 45 |
| Trockendicke (Mikron) | 98 | 25 |
| Naßdicke (Mikron) | 184 | 51 |
| Glyceringehalt (Gewichtsprozent) | 18 | 21 |
| Berstdruck (bar) | 1,91 | 0,54 |
| Ultrafiltration (cm/s × bar) | $0,8 \times 10^{-5}$ | $5,3 \times 10^{-5}$ |
| Permeabilität (cm/s)<br>Harnstoff<br>Vitamin B$_{12}$ | $1,5 \times 10^{-4}$<br>$0,7 \times 10^{-5}$ | $6,9 \times 10^{-4}$<br>$6,0 \times 10^{-5}$ |
| Rückhalt (%)<br>(Dextran 10 000) | 65 | 59 |
| Doppelbrechung | $2,0 \times 10^{-3}$ | $2,1 \times 10^{-3}$ |
| Gangunterschied (nm) | 196 | 53 |
| Schrumpf trocken/naß (%)<br>quer<br>längs | +1,7<br>−0,5 | +1,0<br>+1,8 |

### Beispiel 3

Nach dem Viskoseverfahren wird ein unverstärkter Schlauch (Flachbreite 28 mm) aus Cellulosehydrat-Gel hergestellt. Der Schlauch wird der in der Figur dargestellten Nachbehandlung unterzogen. Er wird von einer Rolle mit 7 m/min zwischen zwei Quetschwalzenpaaren 3, 4 (Abstand ca. 4,50 m) geführt und mit Hilfe von Druckluft (0,12 bar) aufgeblasen. Hierdurch wird eine Querverdehnung von 113% eingestellt bei einem Durchmesser von 38 mm. Der nun radial verdehnte Gelschlauch wird flachgelegt und kontinuierlich über eine Länge von 35 m durch eine auf 50°C beheizte Weichmacherkufe 6 (Glyceringehalt 55 Gewichtsprozent) geführt. Über Abstreifer und Quetschwalzen durchläuft der nochmals aufgeblasene Schlauch ein 4 m langes Heißluft-Trocknerrohr 9 bei 85°C und wird anschließend zur Konfektionierung aufgerollt. Der erfindungsgemäße Schlauch aus Celluloseregenerat wid mit einem vergleichbaren Schlauch von kleinem Durchmesser aus Celluloseregenerat Typ VISKING (Warenzeichen der UCC) verglichen.

Tabelle 3

| Kenngröße | Celluloseregenerat nach dem Stand der Technik<br><br>Typ VISKING® | Celluloseregenerat nach Beispiel 3 |
|---|---|---|
| Durchmesser (mm) | 30 | 31 |
| Flachbreite (mm) | 44 | 48 |
| Flächengewicht (g/m²) | 31 | 30 |
| Trockendicke (Mikron) | 25 | 20 |
| Naßdicke (Mikron) | 45 | 31 |
| Glyceringehalt (Gewichtsprozent) | 15 | 56 |
| Berstdruck (bar) | 0,46 | 0,39 |
| Ultrafiltration (cm/s × bar) | $2,5 \times 10^{-5}$ | $11 \times 10^{-5}$ |
| Permeabilität (cm/s)<br>Harnstoff<br>Vitamin $B_{12}$ | $4,6 \times 10^{-4}$<br>$3,2 \times 10^{-5}$ | $9,3 \times 10^{-4}$<br>$12 \times 10^{-5}$ |
| Rückhalt (%) (Dextran 10 000) | 65 | 47 |
| Doppelbrechung | $8,7 \times 10^{-3}$ | $3,8 \times 10^{-3}$ |
| Gangunterschied (nm) | 218 | 76 |
| Schrumpf trocken/naß (%)<br>quer<br>längs | +1,5<br>−0,5 | +5,5<br>+6,5 |

### Beispiel 4

Nach dem Viskoseverfahren wird ein unverstärkter Schlauch (Flachbreite 29 mm) aus Cellulosehydrat-Gel hergestellt. Nach der Behandlung mit einer 12 Gewichtsprozent Glycerin enthaltenden wäßrigen Lösung wird der Schlauch der in der Figur dargestellten Nachbehandlung unterzogen. Er wird von einer Rolle mit 7 m/min zwischen zwei Quetschwalzenpaaren 3, 4 (Abstand ca. 4,50 m) geführt und mit Hilfe von Druckluft (0,07 bar) aufgeblasen. Hierdurch wird eine Querverdehnung von 90% eingestellt bei einem Durchmesser von 35 mm. Der nun radial verdehnte Gelschlauch wird zunächst flachgelegt und durchläuft dann mit Stützluft im aufgeblasenen Zustand kontinuierlich ein 4 m langes Heißluft-Trocknerrohr 9 bei 85°C und wird anschließend zur Konfektionierung aufgerollt. Der erfindungsgemäße Schlauch aus Celluloseregenerat wird mit einem vergleichbaren Schlauch von kleinem Durchmesser aus Celluloseregenerat Typ CUPROPHAN (Warenzeichen der ENKA GLANZSTOFF) verglichen.

Tabelle 4

| Kenngröße | Celluloseregenerat nach dem Stand der Technik | Celluloseregenerat nach Beispiel 4 |
|---|---|---|
| | Typ CUPROPHAN[®] | |
| Durchmesser (mm) | 30 | 30 |
| Flachbreite (mm) | 46 | 46 |
| Flächengewicht (g/m$^2$) | 31 | 17 |
| Trockendicke (Mikron) | 25 | 13 |
| Naßdicke (Mikron) | 44 | 26 |
| Glyceringehalt (Gewichtsprozent) | 24 | 27 |
| Berstdruck (bar) | 0,29 | 0,35 |
| Ultrafiltration (cm/s × bar) | $5,5 \times 10^{-5}$ | $7,1 \times 10^{-5}$ |
| Permeabilität (cm/s) Harnstoff | $7,6 \times 10^{-4}$ | $8,6 \times 10^{-4}$ |
| Vitamin B$_{12}$ | $6,6 \times 10^{-5}$ | $8,0 \times 10^{-5}$ |
| Rückhalt (%) (Dextran 10 000) | 69 | 58 |
| Doppelbrechung | $18,1 \times 10^{-3}$ | $3,6 \times 10^{-3}$ |
| Gangunterschied (nm) | 450 | 47 |
| Schrumpf trocken/naß (%) quer | −21,7 | +7,5 |
| längs | +9,6 | +5,1 |

## Patentansprüche

1. Viskosemembran für die Dialyse, insbesondere Hämodialyse, die in Längs- und Querrichtung gestreckt ist, dadurch gekennzeichnet, daß sie im trockenen spannungsfreien Zustand in Längs- und Querrichtung im wesentlichen gleich stark orientiert ist und eine Doppelbrechung in jeder Richtung von kleiner/gleich $6 \times 10^{-3}$ und einen Gangunterschied von kleiner/gleich 150 nm aufweist und daß die im noch nassen Zustand vorgenommene Querverdehnung 40 bis 120% gegenüber der nassen Membran vor der Querverdehnung beträgt.

2. Viskosemembran nach Anspruch 1, dadurch gekennzeichnet, daß die Querverdehnung 60 bis 100% beträgt.

3. Viskosemembran nach Anspruch 1 oder 2, dadurch gekennzeichnet, daß sie im trockenen Zustand 30 bis 60 Gew.-% Weichmacher, vorzugsweise Glycerin, enthält.

4. Verfahren zur Herstellung der Viskosemembran nach einem der Ansprüche 1 bis 3, wobei man einen flächenhaften oder schlauchförmigen Körper aus Cellulosehydrat-Gel aus Viskose herstellt, ihn von Säuren, Salzen und schwefelhaltigen Produkten befreit, mit einer Weichmacherlösung in Kontakt bringt und trocknet, dadurch gekennzeichnet, daß man den Körper aus Cellulosehydrat-Gel vor dem Trocknen in Querrichtung in einem Verhältnis verdehnt, das dem der Längsstreckung entspricht, die sich durch den Herstellungsprozeß ergibt.

5. Verfahren nach Anspruch 4, dadurch gekennzeichnet, daß der schlauchförmige Körper aus Cellulosehydrat-Gel durch Aufblasen in Querrichtung verdehnt wird.

6. Verfahren nach Anspruch 4 oder 5, dadurch gekennzeichnet, daß die Weichmacherlösung wäßrig ist und eine Konzentration von 10 bis 15 Gew.-% aufweist und vor oder nach dem Querverdehnen mit dem Körper aus Cellulosehydrat-Gel in Kontakt gebracht wird.

7. Verfahren nach Anspruch 4 oder 5, dadurch gekennzeichnet, daß die Weichmacherlösung wäßrig ist und eine Konzentration von 20 bis 70 Gew.-% aufweist und vor oder nach dem Querverdehnen mit dem Körper aus Cellulosehydrat-Gel in Kontakt gebracht wird.

8. Verfahren nach Anspruch 4 oder 5, dadurch gekennzeichnet, daß vor der Querverdehnung eine Behandlung des Körpers aus Cellulosehydrat-Gel mit einer Weichmacherlösung entsprechend Anspruch 6 und nach der Querverdehnung mit einer Weichmacherlösung entsprechend Anspruch 7 erfolgt.

## Claims

1. Viscose membrane for dialysis, in particular for hemodialysis, which is longitudinally and transversely stretched, characterised in that, in the dry, strainless state, it is substantially equally oriented in the longitudinal and in the transverse directions and has a birefringence in each direction of not more than $6 \times 10^{-3}$ and a phase difference of not more than 150 nm and that the amount of transverse stretching performed in the still wet state is from 40 to 120 per cent, as compared with the wet membrane prior to transverse stretching.

2. Viscose membrane as claimed in claim 1, wherein the amount of transverse stretching is from 60 to 100 per cent.

3. Viscose membrane as claimed in claim 1 or claim 2, which contains in the dry state from 30 to 60 per cent by weight of a plasticiser, preferably glycerol.

4. Process for the manufacture of the viscose membrane as claimed in any one of claims 1 to 3, by producing a sheetlike or tubular body of cellulose hydrate gel from viscose, freeing it from acids, salts and sulphur-containing products, treating it with a plasticiser solution and drying it, wherein the body of cellulose hydrate gel is, prior to drying, stretched in the transverse direction at a rate which corresponds to the rate of longitudinal stretching resulting from the manufacturing process.

5. Process as claimed in claim 4, wherein the tubular body of cellulose hydrate gel is transversely stretched by inflation.

6. Process as claimed in claim 4 or claim 5, wherein an aqueous plasticiser solution is used, which has a concentration from 10 to 15 per cent by weight and is brought into contact with the body of cellulose hydrate gel prior to or after transverse stretching.

7. Process as claimed in claim 4 or claim 5, wherein an aqueous plasticiser solution is used, which has a concentration from 20 to 70 per cent by weight and is brought into contact with the body of cellulose hydrate gel prior to or after transverse stretching.

8. Process as claimed in claim 4 or claim 5, wherein the body of cellulose hydrate gel is prior to transverse stretching treated with a plasticiser solution according to claim 6 and after transverse stretching with a plasticiser solution according to claim 7.

## Revendications

1. Membrane en viscose pour la dialyse, en particulier pour l'hémodialyse, étirée en sens transversal et longitudinal, caractérisée en ce que, à l'état sec et exempte de tension, elle est orientée essentiellement au même degré en sens transversal et longitudinal, présente un indice de biréfringence dans chaque direction inférieur ou égal à $6 \times 10^{-3}$ et une différence de progression inférieure ou égale à 150 nm et en ce que l'étirage transversal effectué à l'état humide s'élève à un taux compris entre 40 et 120%, calculé par rapport à la membrane humide avant l'étirage transversal.

2. Membrane en viscose selon la revendication 1, caractérisée en ce que l'étirage transversal s'élève à un taux compris entre 60 et 100%.

3. Membrane en viscose selon la revendication 1 ou 2, caractérisée ce qu'elle contient à l'état sec une proportion comprise entre 30 et 60% en poids de plastifiant, de préférence de glycérine.

4. Procédé de fabrication d'une membrane en viscose selon l'une des revendications 1 à 3 dans lequel on prépare un corps à surface étendue ou tubulaire en gel d'hydrate de cellulose à partir de viscose, on le libère d'acides, sels et produits contenant du soufre, on le met en contact avec une solution de plastifiant et on le sèche, caractérisé en ce que le corps en gel d'hydrate de cellulose est étiré en sens transversal avant le séchage à un degré qui correspond à celui du sens longitudinal qui est dû au procédé de fabrication.

5. Procédé selon la revendication 4, caractérisé en ce que l'étirage du corps tubulaire en gel d'hydrate de cellulose est réalisé par gonflage en sens transversal.

6. Procédé selon la revendication 4 ou 5, caractérisé en ce que la solution de plastifiant est aqueuse, présente une concentration comprise entre 10 et 15% en poids est mise en contact avec le corps en gel d'hydrate de cellulose avant ou après l'étirage transversal.

7. Procédé selon la revendication 4 ou 5, caractérisé en ce que la solution de plastifiant est aqueuse, présente une concentration comprise entre 20 et 70% en poids et est mise en contact avec le corps en gel d'hydrate de cellulose avant ou après l'étirage transversal.

8. Procédé selon la revendication 4 ou 5, caractérisé en ce qu'avant l'étirage transversal on effectue un traitement du corps en gel d'hydrate de cellulose avec une solution de plastifiant selon la revendication 6 et qu'après l'étirage transversal on effectue un traitement avec la solution de plastifiant selon la revendication 7.

0 001 047